# EUROPÄISCHE PATENTSCHRIFT

(11) **EP 3 727 643 B1**
(45) Veröffentlichungstag und Bekanntmachung des Hinweises auf die Patenterteilung: **04.02.2026**
(21) Anmeldenummer: 18815613.7
(22) Anmeldetag: 04.12.2018
(51) Int. Cl.: B01D 35/16, B01D 35/30, B01D 29/21

(54) **FILTERELEMENT EINES FILTERS FÜR FLÜSSIGKEIT UND FILTER**
FILTER ELEMENT OF A FILTER FOR LIQUID AND FILTER
ÉLÉMENT FILTRANT D'UN FILTRE À LIQUIDE ET FILTRE

(30) Priorität: 22.12.2017 DE 102017012015
(43) Veröffentlichungstag der Anmeldung: 28.10.2020
(73) Patentinhaber: MANN+HUMMEL GmbH, 71636 Ludwigsburg (DE)
(72) Erfinder: JAINEK, Herbert, 74074 Heilbronn (DE)
(74) Vertreter: Mann + Hummel Intellectual Property
(86) Internationale Anmeldenummer: PCT/EP2018/083471
(87) Internationale Veröffentlichungsnummer: WO 2019/120981

(56) Entgegenhaltungen:
- EP-A1- 2 808 071
- EP-A1- 3 249 184
- WO-A1-2013/178680
- JP-A- H11 104 409
- US-A- 3 322 280

## Beschreibung

### Technisches Gebiet

Die Erfindung betrifft ein Filterelement eines Filters für Flüssigkeit, insbesondere Öl oder Kraftstoff, insbesondere einer Brennkraftmaschine, insbesondere eines Kraftfahrzeugs, mit wenigstens einem Filtermedium, welches einen Elementinnenraum bezüglich einer gedachten Achse umfangsmäßig zusammenhängend umgibt und das an wenigstens einer axialen Stirnseite mit einem Endkörper verbunden ist, wobei der Endkörper eine die Achse umgebende Filterelement-Leerlauföffnung aufweist, die mit dem Elementinnenraum verbunden ist, und wenigstens eine Filterelement-Dichtfläche oder Filterelement-Dichtungsfläche einer Filterelement-Dichteinrichtung aufweist, die die wenigstens eine Filterelement-Leerlauföffnung umfangsmäßig zusammenhängend umgibt und mit der die wenigstens eine Filterelement-Leerlauföffnung bei der Montage des Filterelements in einem Filtergehäuse des Filters verschlossen werden kann.

Darüber hinaus betrifft die Erfindung einen Filter für Flüssigkeit, insbesondere Öl oder Kraftstoff, insbesondere einer Brennkraftmaschine, insbesondere eines Kraftfahrzeugs, mit wenigstens einem Filtergehäuse, in dem ein Filterelement austauschbar angeordnet ist und welches wenigstens eine Ablassöffnung zum Ablassen von Flüssigkeit aus dem Filter aufweist, die mit wenigstens einem Ablassverschlusselement verschlossen werden kann.

### Stand der Technik

Aus JP H11 104409 A ist ein Filter zur Flüssigkeitsfiltration bekannt, der ein oberes Gehäuse, ein unteres Gehäuse, sowie ein zylindrisches Filtrationselement umfasst. Das Filtrationselement wird von einem ersten Rohrteil und einem zweiten Rohrteil gehalten. Der offene Endteil des unteren Gehäuses ist in einem Umfangswandteil des oberen Gehäuses eingeschraubt. Wenn eine Ablassschraube entfernt wird, um eine Flüssigkeit aus den Gehäusen für den Austausch des Filterelements abzulassen, fließt die in dem verschraubten Teil des oberen und des unteren Gehäuses eingeschlossene Flüssigkeit aus einer Ablassöffnung.

US 3 322 280 A offenbart einen Filter und Wasserabscheider für Flüssigkeiten wie z. B. Benzin und andere Kohlenwasserstoff-Kraftstoffe. Dieser dient zur Verwendung zwischen einem Kraftstoffvorratsbehälter und einem Zapfhahn, um Kraftstoffe zu filtern und Wasser aus dem Kraftstoff abzuscheiden, wenn dieser aus dem Vorratsbehälter abgezogen wird.

Aus EP 2 808 071 A1 ist eine Filtereinrichtung bekannt mit einem Filtergehäuse, mit einem am Filtergehäuse befestigten Gehäusedeckel, welcher eine Gehäusedeckel-Leerlauföffnung aufweist und mit einem mit dem Gehäusedeckel verbindbaren oder verbundenen Filterelement, welches eine Filterelement-Leerlauföffnung aufweist und in einem in dem Filtergehäuse montierten Zustand im Filtergehäuse eine Rohseite von einer Reinseite trennt, sowie mit einem an dem Gehäusedeckel angebrachten Verschlusselement.

Aus der WO 2013/178680 A1 ist eine Filtereinrichtung, insbesondere für ein Kraftfahrzeug, mit einem Filtergehäuse, mit einem am Filtergehäuse befestigten Gehäusedeckel, welcher eine Gehäusedeckel-Leerlauföffnung aufweist, mit einem mit dem Gehäuse-deckel verbindbaren oder verbundenen Filterelement, welches eine Filterelement-Leerlauföffnung aufweist und in einem in dem Filtergehäuse montierten Zustand im Filtergehäuse eine Rohseite von einer Reinseite trennt, mit einem an dem Gehäusedeckel anbringbaren oder angebrachten Verschlusselement, welches in einem an dem Gehäusedeckel angebrachten Zustand sowohl die Gehäusedeckel-Leerlauföffnung als auch die Filterelement-Leerlauföffnung verschließt, bekannt. Das Verschlusselement weist eine Radial-Dichtung auf, mittels welcher das Verschlusselement in dem an dem Gehäusedeckel angebrachten Zustand in der Filterelement-Leerlauföffnung die Rohseite gegen die Reinseite abdichtet.

Das Dokument EP 3 249 184 A1 zeigt eine Filteranordnung, die ein Filterelement aufweist, das einen Fluidkanal mit einer ersten Längsachse bildet. Es ist ein Ölfilter offenbart mit einem Filterelement und mindestens einer vorderen Endkappe, die an dem Filterelement befestigt ist, wobei die vordere Endkappe eine Ölleitung zum Ankoppeln der Ölfilterpatrone an eine Kupplung eines Ölauslasses eines Ölfiltergehäuses aufweist.

Der Erfindung liegt die Aufgabe zugrunde, ein Filterelement und einen Filter der eingangs genannten Art zu gestalten, bei denen die Flüssigkeit einfacher, schneller, effizienter und zuverlässiger sowohl aus dem Elementinnenraum des Filterelements als auch aus dem das Filterelement umgebenden Innenraum des Filtergehäuses abgelassen werden kann.

### Offenbarung der Erfindung

Diese Aufgabe wird erfindungsgemäß bei dem Filterelement dadurch gelöst, dass die wenigstens eine Filterelement-Dichtfläche oder Filterelement-Dichtungsfläche bezüglich der Achse wenigstens mit einer Richtungskomponente axial gerichtet ist.

Erfindungsgemäß ist also die Filterelement-Dichteinrichtung so ausgestaltet, dass sie bezüglich der Achse wenigstens axial dichtend wirkt. Auf diese Weise können bei dem Zusammenbau des Filters und/oder beim Einbringen eines Ablassverschlusselements in eine Ablassöffnung für Fluid aufgewendete bezüglich der Achse axiale Verbindungskräfte zur Verbesserung der axialen Dichtwirkung der Filterelement-Dichteinrichtung beitragen. Bei einer axialen Abdichtung kann etwaiges Aufquellen von Dichtungen nicht dazu führen, dass eine größere Kraft zum Entfernen der Dichtung in axialer Richtung erforderlich ist, wie dies beispielsweise bei ausschließlich radial wirkenden Dichtung der Fall sein kann.

Vorteilhafterweise kann die Filterelement-Dichteinrichtung so ausgestaltet sein, dass sie ausschließlich in axialer Richtung dichtend wirkt. In diesem Fall kann die Filterelement-Dichtfläche oder Filterelement-Dichtungsfläche so ausgestaltet sein, dass sie ausschließlich axial gerichtet ist.

Vorteilhafterweise kann die Filterelement-Dichteinrichtung eine Filterelement-Dichtfläche aufweisen. An der Filterelement-Dichtfläche kann eine entsprechende Dichtungsfläche einer insbesondere separaten Dichtung dichtend anliegen. Alternativ kann die Filterelement-Dichteinrichtung eine Filterelement-Dichtungsfläche aufweisen. In diesem Fall kann die Filterelement-Dichtungsfläche Teil einer Dichtung oder eines Dichtungsabschnitts auf Seiten des Filterelements sein. Die Filterelement-Dichtungsfläche kann dichtend an einer entsprechenden Dichtfläche anliegen. Diese Dichtfläche kann vorteilhafterweise aufseiten des Filtergehäuses und/oder des Ablassverschlusselements angeordnet sein.

Erfindungsgemäß ist an dem Endkörper eine die Achse umgebende ringförmige Dichtung mit wenigstens einer axial wirkenden Dichtungsfläche angeordnet. Auf diese Weise kann die Dichtung an dem Filterelement vormontiert und gemeinsam mit diesem ausgetauscht werden. Die Dichtung kann dabei fest mit dem Endkörper verbunden sein. Alternativ kann die Dichtung an den Endkörper montiert, insbesondere angesteckt oder aufgesteckt, sein. In diesem Fall kann der Endkörper eine entsprechende wenigstens axial gerichtete und wirkende Dichtfläche aufweisen, welche mit einer entsprechenden axial wirkenden Dichtungsfläche der Dichtung zusammenwirken kann. Darüber hinaus kann die Dichtung auf der der erstgenannten Dichtungsfläche axial abgewandten Seite eine weitere wenigstens axial gerichtete Dichtungsfläche aufweisen, mit der sie mit einer entsprechenden Dichtfläche aufseiten des Filtergehäuses und/oder des Ablassverschlusselements axial dichtend zusammenwirken kann.

Bei einer weiteren vorteilhaften Ausführungsform kann die ringförmige Dichtung hülsenförmig sein. Auf diese Weise kann mit der Dichtung ein axialer Abstand zwischen entsprechenden Dichtflächen einerseits auf Seiten des Filterelements und andererseits auf Seiten des Filtergehäuses und/oder des Ablassverschlusselements überbrückt werden.

Bei einer weiteren vorteilhaften Ausführungsform kann die Filterelement-Leerlauföffnung eine Rohseite des Filterelements mit einer Reinseite verbinden. Entsprechend kann die Filterelement-Dichteinrichtung die Reinseite von der Rohseite trennen.

Bei einer weiteren vorteilhaften Ausführungsform kann die Filterelement-Dichteinrichtung bezüglich der Achse zumindest in axialer Richtung elastisch sein. Auf diese Weise kann durch entsprechende elastische Verformung eine insbesondere montage-, herstellungs- und/oder bauteilbedingte Toleranz besser ausgeglichen werden. Ferner kann eine Dichtwirkung verbessert werden.

Erfindungsgemäß weist der wenigstens eine Endkörper an der dem Elementinnenraum bezüglich der Achse axial abgewandten Außenseite mehrere umfangsmäßig verteilte und zueinander beabstandete Positionierabschnitte mit nach radial außen gerichteten Positionierflächen auf zum Positionieren einer ringförmigen Dichtung der Filterelement-Dichteinrichtung. Mit den beabstandeten Positionierabschnitten kann eine bessere Lagetoleranz erreicht werden. An den Positionierabschnitten kann die Dichtung radial innen partiell anliegen, ohne dort radial dichtend zu wirken. Dabei greifen keine radial wirkende Kräfte an der Dichtung an.

Vorteilhafterweise können die Positionierabschnitte an einer Art Hülse, insbesondere in Form eines Zylinders, eines Kegels oder dergleichen, realisiert sein. Die radial äußere Umfangsseite der Hülse kann entsprechende radiale Vorsprünge, insbesondere Zähne, aufweisen, welche die einzelnen Positionierabschnitte realisieren. Auf diese Weise können die Positionierabschnitte einstückig mit der Hülse realisiert werden. Ferner kann das Innere der Hülse zusätzlich die Filterelement-Leerlauföffnung wenigstens mit bilden.

In einer alternativen Ausführung können derartige Positionierflächen zum Positionieren einer ringförmigen Dichtung der Filterelement-Dichteinrichtung an einer ring- oder hülsenförmigen Dichtung angeordnet und mit dieser einstückig ausgebildet sein. Diese Positionierflächen, beispielsweise in Form von radialen Vorsprüngen, insbesondere Zähne, vermeiden eine radial dichtende Anlage der Dichtung, beispielsweise bei sich radial nach innen erstreckenden Positionierabschnitten der Dichtung.

Die wenigstens eine Verschlusselement-Dicht- oder -Dichtungsfläche des Ablassverschlusselements ist bezüglich der Achse wenigstens mit einer Richtungskomponente axial gerichtet.

Erfindungsgemäß ist also die Filterelement-Dichteinrichtung so ausgestaltet, dass sie bezüglich der Achse wenigstens axial dichtend wirkt. Auf diese Weise können bei dem Zusammenbau des Filters und/oder beim Einbringen eines Ablassverschlusselements in eine Ablassöffnung für Fluid aufgewendete bezüglich der Achse axiale Verbindungskräfte zur Verbesserung der axialen Dichtwirkung der Filterelement-Dichteinrichtung beitragen.

Vorzugsweise ist die Filterelement-Dichteinrichtung so ausgestaltet, dass sie ausschließlich in axialer Richtung dichtend wirkt. Die Verschlusselement- oder -Dichtungsfläche ist dann so ausgestaltet, dass sie ausschließlich axial gerichtet ist.

Vorteilhafterweise kann die Filterelement-Dichteinrichtung eine Verschlusselement-Dichtfläche aufweisen. An der Verschlusselement-Dichtfläche kann eine entsprechende Dichtungsfläche einer insbesondere separaten Dichtung dichtend anliegen. Alternativ kann die Filterelement-Dichteinrichtung eine Verschlusselement-Dichtungsfläche aufweisen. In diesem Fall kann die Verschlusselement-Dichtungsfläche Teil einer Dichtung auf Seiten des Ablassverschlusselements sein. Die Verschlusselement-Dichtungsfläche kann dichtend an einer entsprechenden Dichtfläche anliegen. Diese Dichtfläche kann vorteilhafterweise aufseiten des Filterelements angeordnet sein.

Bei einer vorteilhaften Ausführungsform kann wenigstens ein Zentriervorsprung bezüglich der Achse radial innerhalb der wenigstens einen Verschlusselement-Dichtfläche oder Verschlusselement-Dichtungsfläche angeordnet sein, welcher in die wenigstens eine Filterelement-Leerlauföffnung eingreifen kann. Auf diese Weise kann das Filterelement bezüglich mit dem Ablassverschlusselement bezüglich der Achse zentriert werden. Diese Zentrierung kann beim Anbringen des Ablassverschlusselements an das Filtergehäuse oder beim Einbringen des Filterelements in das Filtergehäuse erfolgen.

Bei der erfindungsgemäßen Ausführungsform kann wenigstens eine die Achse umfangsmäßig umgebende, axial gerichtete Abdeckfläche zum Verschließen wenigstens einer Ablassöffnung eines Filtergehäuses radial außerhalb der wenigstens einen Verschlusselement-Dichtfläche oder Verschlusselement-Dichtungsfläche angeordnet sein. Auf diese Weise können eine Filterelement-Leerlauföffnung und die entsprechende Ablassöffnung des Filtergehäuses jeweils mit getrennten Abschnitten des Ablassverschlusselements verschlossen werden. Auf diese Weise kann verhindert werden, dass beim Entfernen des Ablassverschlusselements ungereinigte Flüssigkeit aus der Rohseite auf die Reinseite des Filters gelangen kann.

Bei einer weiteren vorteilhaften Ausführungsform kann ein Teil einer Ablass-Dichteinrichtung zum Abdichten der Ablassöffnung des Filtergehäuses radial außerhalb der wenigstens einen Verschlusselement-Dicht- oder -Dichtungsfläche angeordnet sein. Mit der Ablass-Dichteinrichtung kann der Innenraum des Filtergehäuses zur Umgebung hin abgedichtet werden. Bei der Ablass-Dichteinrichtung kann es sich um eine radial und/oder axial wirkende Dichtung handeln. Das Ablass-Verschlusselement kann hierzu an einer bezüglich der Achse umfangsmäßigen Außenseite eine Dichtung oder eine Aufnahme, insbesondere Dichtungsnut, für eine Dichtung aufweisen. Bei der Dichtung kann es sich vorteilhafterweise um eine Ringdichtung, insbesondere O-Ringdichtung, handeln.

Vorteilhafterweise kann das Ablassverschlusselement wenigstens einen Teil der dreh- und/oder steckbaren Verbindung aufweisen. Bei der dreh- und/oder steckbaren Verbindung kann es sich insbesondere um eine Schraubverbindung oder eine bajonettverschlussartigen Verbindung handeln. Entsprechend kann das Ablassverschlusselement ein Gewinde oder einen Teil der bajonettverschlussartigen Verbindung aufweisen. Das entsprechende Gegenteil der Verbindung kann vorteilhafterweise an einem Gehäuseteil, insbesondere einem Gehäusedeckel, des Filtergehäuses angeordnet sein.

Eine nicht erfindungsgemäße Aufgabe wird bei dem Gehäuseteil dadurch gelöst, dass das Gehäuseteil wenigstens eine bezüglich der Achse radial innere Ablassöffnung, welche mit der Filterelement-Leerlauföffnung des wenigstens einen Filterelements kommunizieren kann, und wenigstens eine bezüglich der Achse radial äußere Ablassöffnung, welche mit einem das wenigstens eine Filterelement umgebenden Fluid führenden Innenraum des Filtergehäuses kommunizieren kann, aufweist, wobei die radial innere Ablassöffnung mittels wenigstens einem Trennabschnitt von der wenigstens einen radial äußeren Ablassöffnung getrennt ist.

Es können zweierlei Ablassöffnungen, nämlich die wenigstens eine radial innere Ablassöffnung und die wenigstens eine radial äußere Ablassöffnung, vorgesehen sein, sodass beim Entfernen des entsprechenden wenigstens einen Ablassverschlusselements die beiden unterschiedlichen Ablassöffnungen getrennt voneinander freigegeben werden können. So kann verhindert werden, dass ungereinigte Flüssigkeit von der Rohseite des Filters zur Reinseite gelangen kann. Durch die radial äußere Ablassöffnung kann bei der Freigabe die Flüssigkeit aus dem Elementinnenraum durch die entsprechende Fluidelement-Leerlauföffnung entweichen. Die Flüssigkeit aus dem das Filterelement umgebenden Innenraum kann getrennt davon durch die wenigstens eine radial äußere Ablassöffnung entweichen. Auf diese Weise werden die unterschiedlichen Flüssigkeiten nicht vermischt.

Mit dem wenigstens einen Trennabschnitt kann der mit der Filterelement-Leerlauföffnung verbundene Bereich von dem das Filterelement umgebenden fluidführenden Bereich getrennt werden. So kann verhindert werden, dass etwaiger Schmutz aus dem das Filterelement umgebenden Innenraum in den Bereich der Filterelement-Leerlauföffnung und der dortigen Filterelement-Dichteinrichtung gelangen kann.

Bei einer weiteren Ausführungsform kann der wenigstens eine Trennabschnitt eine die Achse umfangsmäßig umgebende Trennwand sein. Auf diese Weise kann ein umfangsmäßig zusammenhängender Trennabschnitt realisiert werden.

Bei einer weiteren Ausführungsform können mehrere radial äußere Ablassöffnungen verteilt in einer die Achse umgebenden Stirnfläche des Gehäuseteils angeordnet sein. Auf diese Weise kann ein gleichmäßiger Abfluss der Flüssigkeit durch die Ablassöffnungen erreicht werden.

Bei einer weiteren Ausführungsform kann auf der der Umgebung zugewandten Seite der wenigstens einen radial äußeren Ablassöffnung wenigstens ein Teil einer Umgebungs-Dichteinrichtung angeordnet sein. Mit der Umgebungs-Dichteinrichtung kann der Innenraum des Filtergehäuses und damit auch der Elementinnenraum zur Umgebung hin abgedichtet werden.

An dem Gehäuseteil kann wenigstens eine bezüglich der Achse umfangsmäßig zusammenhängende Dichtfläche angeordnet sein. Die Dichtfläche kann vorteilhafterweise nach radial innen gerichtet sein. Auf diese Weise kann an der Dichtfläche eine radial wirkende Dichtung angreifen.

Das Gehäuseteil kann eine bezüglich der Achse umfangsmäßig zusammenhängende, insbesondere abgestufte, Aufnahme aufweisen. Die Aufnahme kann die wenigstens eine radial innere Ablassöffnung, die wenigstens eine radial äußere Ablassöffnung und den wenigstens einen Trennabschnitt aufweisen. Zusätzlich kann die Aufnahme den wenigstens einen Teil, insbesondere wenigstens eine Dichtfläche, der Umgebungs-Dichteinrichtung aufweisen. Ferner kann die Aufnahme wenigstens einen Teil einer bezüglich einer gedachten Achse dreh- und/oder steckbaren Verbindung mit wenigstens einem Ablass-verschlusselement aufweisen.

Schließlich wird die Aufgabe erfindungsgemäß bei dem Filter dadurch gelöst, dass dieser wenigstens ein erfindungsgemäßes Filterelement, wenigstens ein Gehäuseteil und wenigstens ein Ablassverschlusselement aufweist.

Im Übrigen gelten die im Zusammenhang mit dem erfindungsgemäßen Filterelement, dem Ablassverschlusselement und dem erfindungsgemäßen Filter und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Filters für Flüssigkeit einer Brennkraftmaschine eines Kraftfahrzeugs;
- Figur 2: eine isometrische Detailansicht eines Gehäusedeckels des Filters aus der Figur 1 im Bereich einer Ablassöffnung für die Flüssigkeit;
- Figur 3: eine isometrische Detailansicht eines Filterelements des Filters aus der Figur 1 im Bereich einer Filterelement-Leerlauföffnung für die Flüssigkeit.

In den Figuren sind gleiche Bauteile mit gleichen Bezugszeichen versehen.

### Ausführungsform(en) der Erfindung

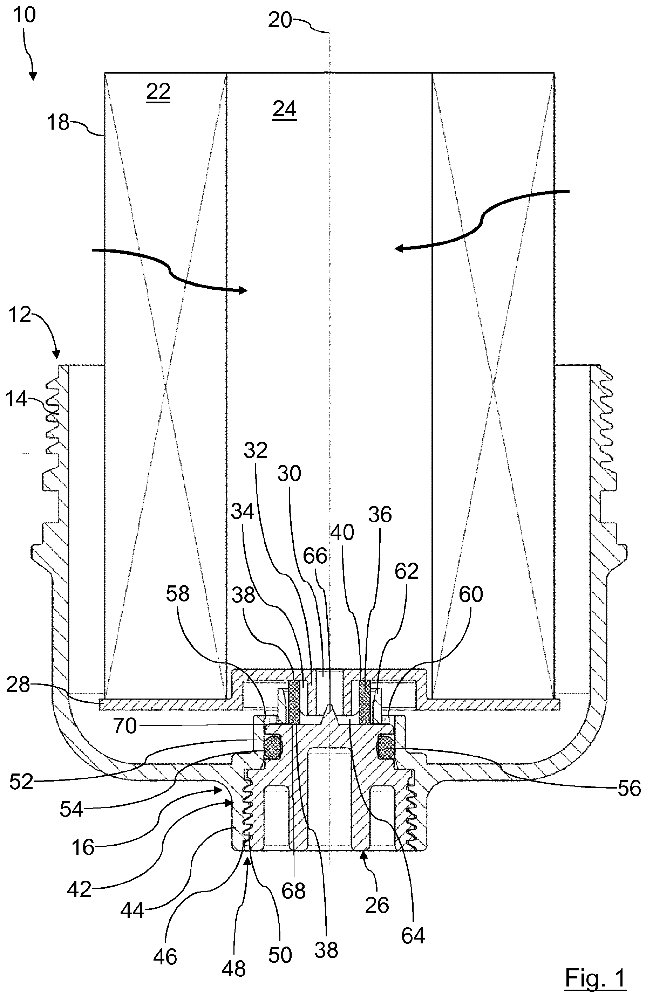

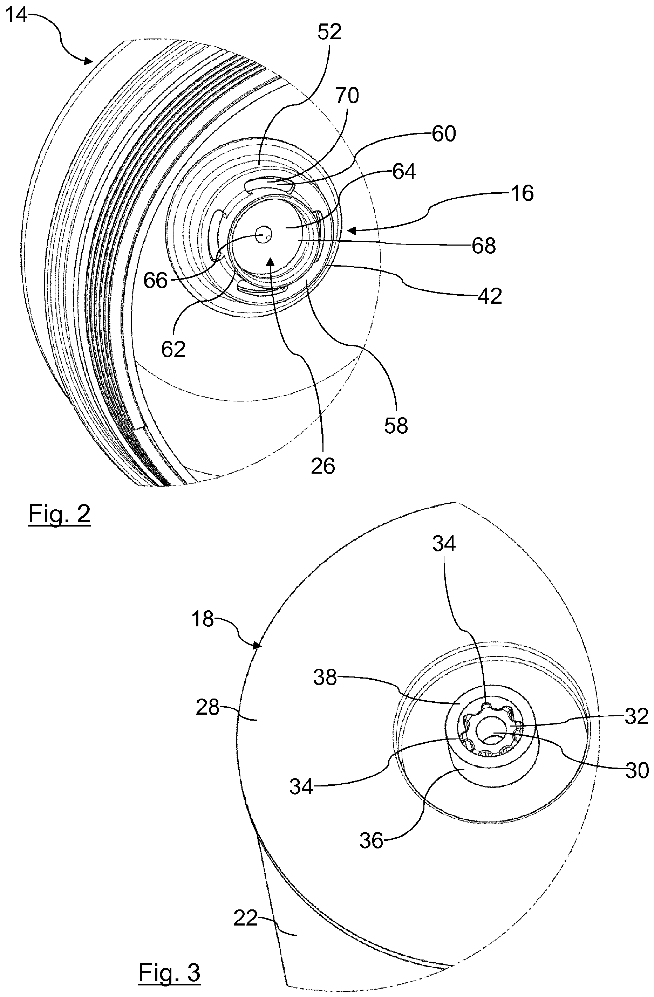

In den Figuren 1 bis 3 ist ein Filter 10 für Flüssigkeit, beispielsweise Öl oder Kraftstoff, eine Brennkraftmaschine eines Kraftfahrzeuges in einem Längsschnitt und in Detailansichten gezeigt. Der Filter 10 ist in einem Flüssigkeitskreislauf, beispielsweise einem Motorölkreislauf oder einem Kraftstoffkreislauf, der Brennkraftmaschine angeordnet.

Der Filter 10 umfasst ein Filtergehäuse 12, von dem in der Figur 1 lediglich der Gehäusedeckel 14 gezeigt ist. Der Gehäusedeckel 14 ist räumlich unten in ein nicht gezeigtes Hauptgehäuse des Filtergehäuses 12 eingeschraubt. Das Filtergehäuse 12 verfügt über einen Flüssigkeitseinlass für die zu reinigende Flüssigkeit und einen Flüssigkeitsauslass für gereinigte Flüssigkeit, welche beide in der Figur 1 nicht gezeigt sind.

Ferner verfügt das Filtergehäuse 12 an der räumlich tiefsten Stelle des Gehäusedeckels 14 über eine Ablassanordnung 16, durch die Flüssigkeit aus dem Inneren des Filtergehäuses 12 beispielsweise zu Wartungszwecken, abgelassen werden kann. In dem Filtergehäuse 12 ist ein als Rundfilterelement ausgestaltetes Filterelement 18 so angeordnet, dass es den Flüssigkeitseinlass von dem Flüssigkeitsauslass trennt. Das Filterelement 18 ist in hier nicht weiter interessierender Weise an dem Gehäusedeckel 14 trennbar befestigt

Das Filterelement 18 weist ein bezüglich einer gedachten Achse 20 umfangsmäßig zusammenhängendes Filtermedium 22 auf, welches einen Elementinnenraum 24 umgibt. Beim Betrieb des Filters 10 wird das Filterelement 18 von radial außen nach radial innen mit der Flüssigkeit durchströmt, sodass der Elementinnenraum 24 die Reinseite des Filterelements 18 und der das Filterelement 18 umgebende Innenraum des Filtergehäuses 12 die Rohseite bildet.

Wenn im Folgenden vorn "axial", "radial", "koaxial", "umfangsmäßig" oder dergleichen die Rede ist, so bezieht sich dies, sofern nicht anders erwähnt, auf die Achse 20. Bei dem gezeigten Ausführungsbeispiel fällt die Achse 20 mit einer Elementachse des Filterelements 18, einer Einbauachse des Filterelements 18 in den Gehäusedeckel 14, einer Gehäuseachse des Filtergehäuses 12 und eine Verbindungsachse eines Ablassverschlusselements 26 der Ablassanordnung 16 mit dem Gehäusedeckel 14 zusammen. Daher wird der Einfachheit halber im Folgenden jeweils auf die Achse 20 Bezug genommen. Es versteht sich, dass bei demontiertem Filter 10 die Achse 20 den jeweils oben erwähnten Achsen entspricht.

An einer der Ablassanordnung 16 zugewandten, in der Figur 1 unteren Stirnseite des Filterelements 18 ist eine Endscheibe 28 befestigt. Die Endscheibe 28 erstreckt sich über die gesamte Stirnseite des Filterelements 18. Im Bereich des Elementinnenraums 24 ist die Endscheibe 28 zum Elementinnenraum 24 hin axial abgestuft. Dort verfügt die Endscheibe 28 über eine koaxiale Filterelement-Leerlauföffnung 30.

Die Filterelement-Leerlauföffnung 30 wird auf der dem Elementinnenraum 24 axial abgewandten Außenseite der Endscheibe 28 in einem Positionierelement 32 gebildet.

Das Positionierelement 32 hat die Form einer Hülse, welche an ihrer radial inneren Umfangsseite kreiszylindrisch ist. An der radial äußeren Umfangsseite ist das Positionierelement 32 gezahnt und bildet so radial außen eine Vielzahl von umfangsmäßig zueinander beabstandeten Positionierabschnitten 34 für eine Filterelement-Dichtung 36. Die Positionierabschnitte 34 erstrecken sich jeweils parallel zur Achse 20.

Die Filterelement-Dichtung 36 ist als Hülse in Form eines kreisförmigen Hohlzylinders ausgestaltet, welche koaxial angeordnet ist. Mit ihrer radial inneren Umfangsseite liegt die Filterelement-Dichtung 36 nicht radial dichtend, mit umfangsmäßigen Unterbrechungen an den jeweiligen Positionierabschnitten 34 an und wird so positioniert.

An ihren axial gegenüberliegenden Stirnseiten weist die Filterelement-Dichtung 36 jeweils eine Filterelement-Dichtungsfläche 38 auf. Die Filterelement-Dichtungsflächen 38 sind jeweils ausschließlich axial gerichtet. Die Filterelement-Dichtung 36 weist daher keine in radialer Richtung wirkende Dichtfläche auf.

Die Filterelement-Dichtung 36 überragt das Positionierelement 32 in axialer Richtung. Die Filterelement-Dichtung 36 ist aus einem Elastomer und zumindest in axialer Richtung elastisch.

Mit ihrer dem Elementinnenraum 24 axial zugewandten Filterelement-Dichtungsfläche 38 liegt die Filterelement-Dichtung 36 in axialer Richtung dichtend wirkend an einer Filterelement-Dichtfläche 40 an. Die Filterelement-Dichtfläche 40 umgibt das Positionierelement 32 radial außen umfangsmäßig zusammenhängend auf der dem Elementinnenraum 24 axial abgewandten Außenseite der Endscheibe 28. Die Filterelement-Dichtfläche 40 ist ebenfalls ausschließlich in axialer Richtung gerichtet.

Die Ablassanordnung 16 umfasst das Ablassverschlusselement 26 und eine Aufnahme 42 für das Ablassverschlusselement 26, die sich im räumlich unteren Teil des Gehäusedeckels 14 befindet. Die Aufnahme 42 ist insgesamt einstückig mit dem Gehäusedeckel 14 ausgebildet.

Die Aufnahme 42 umfasst einen koaxialen Verbindungsabschnitt 44 in Form einer kreiszylindrischen Hülse an der Außenseite des Gehäusedeckels 14. An seiner radial inneren Umfangsseite verfügt der Verbindungsabschnitt 44 über ein Innengewinde 46 einer Schraubverbindung 48, welches mit einem entsprechenden Außengewinde 50 an der radial äußeren Umfangsseite des Ablassverschlusselements 26 zusammenwirkt.

Auf der dem Filterelement 18 axial zugewandten Innenseite des Gehäusedeckels 14 weist die Aufnahme 42 einen koaxialen Dichtabschnitt 52 in Form eines hohlen Kreiszylinders auf. Der Dichtabschnitt 52 bildet an seiner radial inneren Umfangsseite eine Umgebungs-Dichtfläche 54, welche nach radial innen gerichtet ist. An der Umgebungs-Dichtfläche 54 liegt ein Umgebungsdichtring 56 in radialer Richtung dichtend wirkend an. Der Umgebungsdichtring 56 ist in einer Dichtungsnut in der radial äußeren Umfangsseite des Ablassverschlusselements 26 angeordnet.

Auf der dem Boden des Gehäusedeckels 14 axial abgewandten Seite ist der Dichtabschnitt 52 um 90° nach radial innen gebogen und bildet dort eine Stirnwand 58. In der Stirnwand 58 sind umfangsmäßig verteilt mehrere radial äußere Ablassöffnungen 60 angeordnet.

Radial innerhalb der radial äußeren Ablassöffnungen 60 ist die Stirnwand 58 um 90° vom Boden des Gehäusedeckels 14 abgewandt gebogen und geht in einen Trennabschnitt 62 über. Der Trennabschnitt 62 hat die Form eines koaxialen hohlen Kreiszylinders. Der Trennabschnitt 62 bildet so eine umfangsmäßig zusammenhängende Trennwand. Der Trennabschnitt 62 umgibt eine koaxiale radial innere Ablassöffnung 64. Der Trennabschnitt 62 trennt so die radial äußeren Ablassöffnungen 60 von der radial inneren Ablassöffnung 64.

Im Bereich seines der Stirnwand 58 axial abgewandten Randes ist der Trennabschnitt 62 an der radial inneren Umfangsseite trichterartig aufgeweitet. Eine axiale Ausdehnung des Trennabschnitts 62 ist kleiner als eine axiale Ausdehnung der Filterelement-Dichtung 36 in entspanntem Zustand. Bei einer axialen Kompression der Filterelement-Dichtung 36 kann der Trennabschnitt 62 als Anschlag dienen. Ein Innendurchmesser des Trennabschnitts 62 ist größer als ein Außendurchmesser der Filterelement-Dichtung 36. Bei montiertem Filterelement 18 umgibt der Trennabschnitt 62 die Filterelement-Dichtung 36, ohne diese zu berühren. Auf diese Weise findet keine radiale Dichtwirkung zwischen dem Trennabschnitt 62 und der Filterelement-Dichtung 36 statt.

Die dem Innenraum des Filtergehäuses 12 axial zugewandte Stirnseite des Ablassverschlusselements 26 verläuft eben und senkrecht zur Achse 20. In ihrem Zentrum weist die Stirnseite ein konisches koaxiales Zentrierelement 66 auf. Der maximale Außendurchmesser des Zentrierelements 66 ist kleiner als der Innendurchmesser der Filterelement-Leerlauföffnung 30. Das Zentrierelement 66 kann so in die Filterelement-Leerlauföffnung 30 eingreifen, um das Filterelement 18 entsprechend zu zentrieren.

Radial außerhalb des Zentrierelements 66 bildet die Stirnseite des Ablassverschlusselements 26 eine umfangsmäßig zusammenhängende Dichtfläche 68. Die Dichtfläche 68 entspricht in ihrem Durchmesser und ihrer radialen Ausdehnung der entsprechend zugewandten, räumlich unteren Filterelement-Dichtungsfläche 38 der Filterelement-Dichtung 36. Die Dichtfläche 68 ist ausschließlich in axialer Richtung gerichtet. Die Filterelement-Dichtungsfläche 38 der Filterelement-Dichtung 36 liegt bei montiertem Filter 10 ausschließlich in axialer Richtung dichtend wirkend an der Dichtfläche 68 an.

Radial außerhalb der Dichtfläche 68 bildet die Stirnseite des Ablassverschlusselements 26 eine ringförmige Abdeckfläche 70, mit welcher bei montiertem Filter 10 die radial äußeren Ablassöffnungen 60 abgedeckt und verschlossen werden.

Ein radial äußerer Durchmesser der Stirnseite des Ablassverschlusselements 26 entspricht einem radial inneren Durchmesser des Dichtabschnitts 52 der Aufnahme 42.

Mit der Filterelement-Dichtung 36 wird die Reinseite des Filterelements 18 von der Rohseite getrennt. Der Trennabschnitt 62 in Kombination mit der labyrinthartigen Anordnung der Vertiefung der Endscheibe 28 verhindern, dass Grobschmutz, beispielsweise Späne, von der Rohseite in den Bereich der Filterelement-Dichtung 36 gelangen und deren Dichtwirkung beeinträchtigen kann.

Zum Ablassen der Flüssigkeit aus dem Filter 10, beispielsweise zu Wartungszwecken, wird das Ablassverschlusselement 26 aus der Aufnahme 42 herausbewegt, beispielsweise herausgeschraubt. Dabei gibt die Filterelement-Dichtung 36 auf der der Dichtfläche 68 zugewandten Seite die Verbindung zwischen der Filterelement-Leerlauföffnung 30 und der radial inneren Ablassöffnung 64 frei, sodass Flüssigkeit von der Reinseite ablaufen kann.

Außerdem gibt die Abdeckfläche 70 die radial äußeren Abflussöffnungen 60 frei, sodass die Flüssigkeit von der Rohseite durch die radial äußeren Ablassöffnungen 60 ablaufen kann.

Zum Austausch des Filterelements 18 wird der Gehäusedeckel 14 aus dem Gehäusegrundkörper herausgeschraubt. Anschließend kann das Filterelement 18 mitsamt der Filterelement-Dichtung 36 aus dem Gehäusedeckel 14 in axialer Richtung herausgezogen werden und ausgetauscht werden.

Der Zusammenbau des Filters 10 erfolgt in umgekehrter Richtung.

## Patentansprüche

1. Filterelement (18) eines Filters (10) für Flüssigkeit, insbesondere Öl oder Kraftstoff, insbesondere einer Brennkraftmaschine, insbesondere eines Kraftfahrzeugs, mit wenigstens einem Filtermedium (22), welches einen Elementinnenraum (24) bezüglich einer gedachten Achse (20) umfangsmäßig zusammenhängend umgibt und das an wenigstens einer axialen Stirnseite mit einem Endkörper (28) verbunden ist, wobei der Endkörper (28) eine die Achse (20) umgebende Filterelement-Leerlauföffnung (30) aufweist, die mit dem Elementinnenraum (24) verbunden ist, und wenigstens eine Filterelement-Dichtfläche oder Filterelement-Dichtungsfläche (38, 40) einer Filterelement-Dichteinrichtung (36, 38, 40, 68) aufweist, die die wenigstens eine Filterelement-Leerlauföffnung (30) umfangsmäßig zusammenhängend umgibt und mit der die wenigstens eine Filterelement-Leerlauföffnung (30) bei der Montage des Filterelements (18) in einem Filtergehäuse des Filters (10) verschlossen werden kann, wobei die wenigstens eine Filterelement-Dichtfläche oder Filterelement-Dichtungsfläche (38, 40) bezüglich der Achse (20) wenigstens mit einer Richtungskomponente axial gerichtet ist, wobei an dem Endkörper (28) eine die Achse (20) umgebende ringförmige Dichtung (36) mit wenigstens einer axial wirkenden Dichtungsfläche (38) angeordnet ist, **dadurch gekennzeichnet, dass** der wenigstens eine Endkörper (28) an der dem Elementinnenraum (24) bezüglich der Achse (20) axial abgewandten Außenseite mehrere umfangsmäßig verteilte und zueinander beabstandete Positionierabschnitte (34) mit nach radial außen gerichteten Positionierflächen aufweist zum Positionieren der ringförmigen Dichtung (36) der Filterelement-Dichteinrichtung (36, 38, 40, 68).

2. Filterelement nach Anspruch 1, **dadurch gekennzeichnet, dass** die ringförmige Dichtung (36) hülsenförmig ist.

3. Filterelement nach einem der vorigen Ansprüche, **dadurch gekennzeichnet, dass** die Filterelement-Leerlauföffnung (30) eine Rohseite des Filterelements (18) mit einer Reinseite verbindet.

4. Filterelement nach einem der vorigen Ansprüche, **dadurch gekennzeichnet, dass** die Filterelement-Dichteinrichtung (36, 38, 40, 68) bezüglich der Achse (20) zumindest in axialer Richtung elastisch ist.

5. Filter (10) für Flüssigkeit, insbesondere Öl oder Kraftstoff, insbesondere einer Brennkraftmaschine, insbesondere eines Kraftfahrzeugs, mit wenigstens einem Filtergehäuse (12), in dem ein Filterelement (18) austauschbar angeordnet ist und welches wenigstens eine Ablassöffnung (60) zum Ablassen von Flüssigkeit aus dem Filter (10) aufweist, die mit wenigstens einem Ablassverschlusselement (26) verschlossen werden kann, **dadurch gekennzeichnet, dass** der Filter (10) wenigstens ein Filterelement (18) nach einem der Ansprüche 1 bis 4, wenigstens ein Gehäuseteil (14) und wenigstens ein Ablassverschlusselement (26) mit wenigstens einem Teil (50) einer bezüglich einer gedachten Achse (20) dreh- und/oder steckbaren Verbindung (48) zum Verbinden des Ablassverschlusselements (26) mit dem Filtergehäuse (12) und wenigstens einer Verschlusselement-Dichtfläche oder Verschlusselement-Dichtungsfläche (68) zum Verschließen der Filterelement-Leerlauföffnung (30) des Filterelements (18) aufweist.

6. Filter nach Anspruch 5, **dadurch gekennzeichnet, dass** die wenigstens eine Verschlusselement-Dichtfläche oder Verschlusselement-Dichtungsfläche (68) die Achse (20) umfangsmäßig zusammenhängend umgibt, wobei die wenigstens eine Verschlusselement-Dichtfläche oder Verschlusselement-Dichtungsfläche (68) bezüglich der Achse (20) ausschließlich axial gerichtet ist, und wobei wenigstens eine die Achse (20) umfangsmäßig umgebende, axial gerichtete Abdeckfläche (70) zum Verschlie-ßen wenigstens der Ablassöffnung (60) des Filtergehäuses (12) radial außerhalb der wenigstens einen Verschlusselement-Dichtfläche oder Verschlusselement-Dichtungsfläche (68) angeordnet ist..

7. Filter nach Anspruch 6, **dadurch gekennzeichnet, dass** ein Zentriervorsprung (66) bezüglich der Achse (20) radial innerhalb der wenigstens einen Verschlusselement-Dichtfläche oder Verschlusselement-Dichtungsfläche (68) angeordnet ist, welcher in die wenigstens eine Filterelement-Leerlauföffnung (30) eingreifen kann.

8. Filter nach Anspruch 6 oder 7, **dadurch gekennzeichnet, dass** ein Teil (56) einer Ablass-Dichteinrichtung (54, 56) zum Abdichten der wenigstens einen Ablassöffnung (60) des Filtergehäuses (12) radial außerhalb der wenigstens einen Verschlusselement-Dichtfläche oder Verschlusselement-Dichtungsfläche (68) angeordnet ist.

## Claims

1. Filter element (18) of a filter (10) for liquid, in particular oil or fuel, in particular of an internal combustion engine, in particular of a motor vehicle, with at least one filter medium (22) which surrounds an element interior space (24) in a circumferentially continuous manner with respect to an imaginary axis (20) and which is connected to an end body (28) on at least one axial front face, wherein the end body (28) features a filter element idle opening (30) surrounding the axis (20), said filter element idle opening being connected to the element interior space (24), and at least one filter element sealing surface or filter element seal surface (38, 40) of a filter element sealing device (36, 38, 40, 68) which circumferentially surrounds the at least one filter element idle opening (30) continuously and with which the at least one filter element idle opening (30) can be closed when the filter element (18) is mounted in a filter housing of the filter (10), wherein the at least one filter element sealing surface or filter element seal surface (38, 40) is directed axially with respect to the axis (20) with at least one directional component, wherein an annular seal (36) surrounding the axis (20) with at least one axially acting seal surface (38) is disposed on the end body (28), **characterized in that** the at least one end body (28) features, on the exterior side facing axially away from the element interior space (24) in relation to the axis (20), a plurality of circumferentially distributed and mutually spaced positioning sections (34) with radially outwardly directed positioning surfaces for positioning the annular seal (36) of the filter element sealing device (36, 38, 40, 68).

2. Filter element according to claim 1, **characterized in that** the annular seal (36) is sleeve-shaped.

3. Filter element according to one of the above claims, **characterized in that** the filter element idle opening (30) connects a raw side of the filter element (18) to a clean side.

4. Filter element according to one of the above claims, **characterized in that** the filter element sealing device (36, 38, 40, 68) is elastic with respect to the axis (20) at least in the axial direction.

5. Filter (10) for liquid, in particular oil or fuel, in particular of an internal combustion engine, in particular of a motor vehicle, with at least one filter housing (12) in which a filter element (18) is replaceably disposed and which features at least one discharge opening (60) for discharging liquid from the filter (10), which can be closed with at least one discharge closure element (26), **characterized in that** the filter (10) features at least one filter element (18) according to one of the claims 1 to 4, at least one housing part (14) and at least one discharge closure element (26) with at least one part (50) of a connection (48) that can be rotated and/or plugged in relative to an imaginary axis (20) for connecting the discharge closure element (26) to the filter housing (12) and at least one closure element sealing surface or closure element seal surface (68) for closing the filter element idle opening (30) of the filter element (18).

6. Filter according to claim 5, **characterized in that** the at least one closure element sealing surface or closure element seal surface (68) surrounds the axis (20) in a circumferentially continuous manner, wherein the at least one closure element sealing surface or closure element seal surface (68) is directed exclusively axially with respect to the axis (20), and wherein at least one axially oriented cover surface (70) surrounding the axis (20) circumferentially is disposed radially outside the at least one closure element sealing surface or closure element seal surface (68) of the sealing element for closing at least the discharge opening (60) of the filter housing (12).

7. Filter according to claim 6, **characterized in that** a centering projection (66) is arranged radially inside the at least one closure element sealing surface or closure element seal surface (68) with respect to the axis (20), said centering projection being able to engage in the at least one filter element idle opening (30).

8. Filter according to claim 6 or 7, **characterized in that** a part (56) of a discharge sealing device (54, 56) for sealing the at least one discharge opening (60) of the filter housing (12) is arranged radially outside the at least one closure element sealing surface or closure element seal surface (68).

## Revendications

1. Élément filtrant (18) d'un filtre (10) pour liquide, en particulier huile ou carburant, en particulier d'un moteur à combustion interne, en particulier d'un véhicule automobile, avec au moins un milieu filtrant (22) qui entoure de manière continue sur la circonférence un espace intérieur d'élément (24) par rapport à un axe imaginaire (20) et qui est relié à au moins une face frontale axiale à un corps d'extrémité (28), le corps d'extrémité (28) présentant un orifice de marche à vide d'élément filtrant (30) entourant l'axe (20), lequel orifice d'écoulement d'élément filtrant étant relié à l'espace intérieur d'élément (24), et présentant au moins une surface étanche d'élément filtrant ou surface de joint d'élément filtrant (38, 40) d'un dispositif d'étanchéité d'élément filtrant (36, 38, 40, 68) qui entoure de manière continue sur la circonférence l'orifice de marche à vide d'élément filtrant (30), au moins au nombre d'un, et avec lequel l'orifice de marche à vide d'élément filtrant (30), au moins au nombre d'un, peut être fermé lors du montage de l'élément filtrant (18) dans un boîtier de filtre du filtre (10), la surface d'étanchéité d'élément filtrant ou surface de joint d'élément filtrant (38, 40), au moins au nombre d'une, étant orientée axialement par rapport à l'axe (20) avec au moins une composante directionnelle, un joint d'étanchéité annulaire (36) entourant l'axe (20) avec au moins une surface de joint (38) agissant axialement étant disposé sur le corps d'extrémité (28), **caractérisé en ce que** le corps d'extrémité (28), au moins au nombre d'un, présente, sur la face extérieure opposée axialement à l'espace intérieur d'élément (24) par rapport à l'axe (20), plusieurs sections de positionnement (34) réparties sur la circonférence et espacées les unes des autres, avec des surfaces de positionnement orientées radialement vers l'extérieur, pour positionner le joint d'étanchéité annulaire (36) du dispositif d'étanchéité d'élément filtrant (36, 38, 40, 68).

2. Élément filtrant selon la revendication 1, **caractérisé en ce que** le joint d'étanchéité annulaire (36) est en forme de douille.

3. Élément filtrant selon l'une quelconque des revendications précédentes, **caractérisé en ce que** l'orifice de marche à vide d'élément filtrant (30) relie un côté brut de l'élément filtrant (18) à un côté pur.

4. Élément filtrant selon l'une quelconque des revendications précédentes, **caractérisé en ce que** le dispositif d'étanchéité d'élément filtrant (36, 38, 40, 68) est élastique par rapport à l'axe (20) au moins dans le sens axial.

5. Filtre (10) pour liquide, en particulier huile ou carburant, en particulier d'un moteur à combustion interne, en particulier d'un véhicule automobile, comprenant au moins un boîtier de filtre (12) dans lequel un élément filtrant (18) est logé de manière interchangeable et qui présente au moins une ouverture d'évacuation (60) pour évacuer le liquide du filtre (10), laquelle ouverture d'évacuation pouvant être fermée par au moins un élément de fermeture d'évacuation (26), **caractérisé en ce que** le filtre (10) présente au moins un élément filtrant (18) selon l'une quelconque des revendications 1 à 4, au moins une partie de boîtier (14) et au moins un élément de fermeture d'évacuation (26) avec au moins une partie (50) d'une liaison (48) pouvant être tournée et/ou enfichée par rapport à un axe imaginaire (20) pour relier l'élément de fermeture d'évacuation (26) au boîtier de filtre (12) et au moins une surface étanche d'élément de fermeture ou surface d'étanchéité d'élément de fermeture (68) pour fermer l'orifice de marche à vide d'élément filtrant (30) de l'élément de filtre (18).

6. Filtre selon la revendication 5, **caractérisé en ce que** la surface étanche d'élément de fermeture ou surface d'étanchéité d'élément de fermeture (68), au moins au nombre d'une, entoure l'axe (20) de manière continue sur sa circonférence, la surface étanche d'élément de fermeture ou surface d'étanchéité d'élément de fermeture (68), au moins au nombre d'une, étant orientée exclusivement axialement par rapport à l'axe (20), et au moins une surface de recouvrement (70) orientée axialement et entourant circonférentiellement l'axe (20) étant disposée radialement à l'extérieur de la surface étanche d'élément de fermeture ou surface d'étanchéité d'élément de fermeture (68), au moins au nombre d'une, pour fermer au moins l'ouverture d'évacuation (60) du boîtier de filtre (12).

7. Filtre selon la revendication 6, **caractérisé en ce qu'**une saillie de centrage (66) est disposée radialement à l'intérieur de la surface étanche d'élément de fermeture ou surface d'étanchéité d'élément de fermeture (68), au moins au nombre d'une, par rapport à l'axe (20), laquelle saillie de centrage pouvant s'engager dans l'orifice de marche à vide d'élément filtrant (30), au moins au nombre d'un.

8. Filtre selon la revendication 6 ou 7, **caractérisé en ce qu'**une partie (56) d'un dispositif d'étanchéité d'évacuation (54, 56) pour assurer l'étanchéité de l'ouverture d'évacuation (60), au moins au nombre d'une, du boîtier de filtre (12) est disposée radialement à l'extérieur de la surface étanche d'élément de fermeture ou surface d'étanchéité d'élément de fermeture (68), au moins au nombre d'une.
